# EUROPEAN PATENT APPLICATION

(11) **EP 1 061 731 A2**
(43) Date of publication of application: **20.12.2000**
(21) Application number: 00112602.8
(22) Date of filing: 14.06.2000
(51) Int. Cl.: H04N 1/40

(54) **Method of and system for distinguishing regions in black and white image information**

(30) Priority: 14.06.1999 JP 16652599
(71) Applicant: RISO KAGAKU CORPORATION, Tokyo (JP)
(72) Inventor: Ishitoya, Mitsuaki, c/o Riso Kagaku Corp. R&D Cen., Inashiki-gun, Ibaraki-ken (JP); Tadakazu, Yokoyama, c/o Riso Kagaku Corp. R&D Cen., Inashiki-gun, Ibaraki-ken (JP)
(74) Representative: Klunker . Schmitt-Nilson . Hirsch

(57) **Abstract**

Picture elements inside a character region and those in a picture region are distinguished from each other in picture elements represented by black and white image information. The picture elements are once divided into flat region picture elements including picture elements inside a character and in a picture region and the other picture elements, and then the flat region picture elements are divided into those inside a character and those in a picture region by taking each of all the flat region picture elements as an object picture element, determining the probability that the object picture element is a picture element inside a character on the basis of the value of the object picture element and the values of a plurality of picture elements around the object picture element. The object picture element is determined to be a picture element inside a character on the basis of the probability, and the object picture elements, which are not determined to be picture elements inside a character, is determined to be picture elements in a picture region.

## Description

### BACKGROUND OF THE INVENTION

### Field of the Invention

This invention relates to a region distinguishing method of and a region distinguishing system for distinguishing picture elements forming a character region (a region formed by line works such as characters, line drawings and the like) and those forming a picture region from each other in picture elements of black and white image information.

### Description of the Related Art

Recently, by the advent of inexpensive scanners, digital cameras and the like, it has become feasible to easily make image data by use of a wide variety of image taking-in systems. Further wide spread of office automation has made it feasible to insert a picture in a line-work original such as those created by use of a word processor which have been formed solely of characters, tables, line drawings and the like which are expressed in black and white (two values). Further, in gravure, halftone dot originals are often used as an original for printing.

Thus, recently, originals having black and white characters, tables, line drawings and the like which are generally expressed in two values together with a silver-salt picture and/or a halftone dot image (not limited to a picture) are prevailing over originals simply expressed in black and white, and the arrangement of printing originals is getting more and more complicated.

When making print by use of a printer, a stencil printer or the like, it is necessary to read an original having thereon characters, pictures and halftone dots by a scanner, to obtain a multiple gradation image signal by sampling picture element to picture element the image signal output from the scanner, to convert the multiple gradation image signal to a binary image signal, and to output a print on the basis of the binary image signal.

When converting a multiple gradation image signal to a binary image signal, a simple binary coding method, in which an image signal is binary-coded on the basis of a single threshold value, has been employed for a line-work original formed by, characters, line drawings and the like, and a binary coding method such as a pseudo-halftone expression method has been employed for an original formed by a picture having halftones. As typical pseudo-halftone expression methods, there have been known a dither method and an error diffusion method.

In the simple binary coding method, the multiple gradation image signal is scanned in the main scanning direction and the sub-scanning direction, and the multiple gradation image signal component for each picture element is binary-coded on the basis of a predetermined threshold value. In the dither method, a threshold value is fluctuated in a certain pattern to create a dither matrix, and the multiple gradation image signal of the dither matrix is scanned in the main scanning direction and the sub-scanning direction, and the density of each picture element is binary-coded on the basis of a corresponding threshold value, whereby pseudo halftones are expressed on a printing paper. In the error diffusion method, the multiple gradation image signal is scanned in the main scanning direction and the sub-scanning direction, binary coding errors occurring around an object picture element are propagated to the object picture element in a predetermined proportion, and the image signal component for the rearranged object picture element is binary-coded, whereby pseudo halftones are expressed on a printing paper.

Since the simple binary coding method tends to collect black picture elements at portions where change in density gradient is sharp, it is effective for images such as characters and line drawings where the contrast is to be enhanced. However the simple binary coding method is not suitable for binary-coding an image signal such as that representing a picture where change in density gradient is gentle and the contrast is weak since it damages the image information where density gradient change is smooth.

On the other hand, the binary coding methods employing pseudo-halftone processing such as that by the dither method or the error diffusion method spuriously express regions where the density gradient is gentle and is suitable for an image such as a picture where the contrast is weak. However, the binary coding methods employing pseudo-halftone processing are not suitable for images such as characters and line drawings where change in density gradient is sharp and black picture elements are to be concentrated, since the binary coding methods can generate a white picture element at a portion where the picture element should be black, deteriorate the sharpness of the characters and deform thin characters.

As can be understood from the description above, when making print of an original where characters, pictures, halftone dots mingle each other, it is preferred that the binary coding of the multiple gradation image signal read out from the original be performed by different methods according to the region of the original. That is, it is preferred that an image signal fraction representing a region formed of characters, tables, line drawings and/or the like which are mainly expressed by two values (will be simply referred to as "character region", hereinbelow) be binary-coded by the simple binary coding method whereas an image signal fraction representing a region formed of a silver-salt picture and/or a halftone dot image where halftones are to be expressed (will be referred to as "halftone region", hereinbelow) be binary-coded by use of the dither method or the error diffusion method. In order to realize this, it is necessary to precisely distinguish the character region and the halftone region for one frame of read-our image signal, which corresponds to one original, and to perform binary coding in a manner optimal to each of the character region and the halftone region. Further, when a picture of a halftone dot original is subjected to binary coding such as halftone dot processing, moire is apt to be generated, and accordingly it is not preferred that the same binary coding is simply carried out on both a halftone dot original and a silver-salt picture. From this viewpoint, it is necessary to precisely distinguish the character region, the picture region and the halftone dot region from each other and to perform binary coding in a manner optimal to each of the regions.

In the stencil printer, due to a large dot gain, gradation differentiation loss is apt to occur. Accordingly, when the stencil printer makes print on the basis of an image signal binary-coded by a given method, the obtained print is darker in whole than that printed by other printers on the basis of the same binary-coded image signal. For example, when an image signal fraction for a halftone region is simply binary-coded by the error diffusion method, the halftone region cannot be well reproduced by the stencil printer. Accordingly, it is necessary to select a binary coding method depending on not only the kind of the region but also the type of the printer.

As a method of distinguishing the regions on the original, there has been known a method in which the character region is determined on the basis of information on a large density difference for each of a reference area including an object picture element (characters are determined solely on the basis of edge information), and the halftone region is determined on the basis of a halftone dot pattern which periodically appears. See, for instance, Japanese Unexamined Patent Publication No. 7(1995)-322061. In accordance with this method, the character region (especially edges of characters) and the picture region can be distinguished from each other more precisely as compared with a traditional method in which the regions are distinguished by simply scanning a small reference area (such as of 3×3) picture element to picture element.

The method disclosed, for instance, in Japanese Unexamined Patent Publication No. 7(1995)-322061 becomes better in accuracy of distinguishment as the reference area becomes larger (e.g., 9×9). Accordingly, an attempt of improving the accuracy of distinguishment encounters difficulties that an extremely large memory is required, which increases the scale of the circuit and adds to the cost, and the data processing algorism becomes complicated, which increases the time required for distinguishment.

Further, in the aforesaid traditional method, characters are determined solely on the basis of edge information, and accordingly, though they can be relatively easily determined when they are small in width, the inside of characters can be mistaken for a picture region when the characters are relatively large in width.

Further when the dot gain is large as in the stencil printer, unevenness in density can appear between reference areas when the reference areas become large.

### SUMMARY OF THE invention

In view of the foregoing observations and description, the primary object of the present invention is to provide a region distinguishing method and a region distinguishing system which can precisely distinguish picture elements in a picture region from those inside a character by use of relatively small reference areas.

In accordance with the present invention, the picture elements represented by black and white image information are first divided into two groups of picture elements, one group consisting of picture elements which have been determined to be those inside a character region or to be those in a picture region, and the other group consisting of picture elements which have been determined to be neither those inside a character region nor those in a picture region. This division may be performed by a known method, for instance, by the aforesaid method in which each reference area is scanned picture element to picture element. The picture elements in the former group will be referred to as "flat region picture elements", hereinbelow. Then each of the flat region picture elements is determined whether it is a picture element in a character region or a picture region.

That is, in accordance with one aspect of the present invention, there is provided a region distinguishing method of distinguishing picture elements inside a character region and those in a picture region from each other in picture elements represented by black and white image information, the method comprising the steps of
dividing the picture elements into flat region picture elements including picture elements inside a character and in a picture region and the other picture elements, and
dividing the flat region picture elements into those inside a character and those in a picture region by taking each of all the flat region picture elements as an object picture element, determining the probability that the object picture element is a picture element inside a character on the basis of the value of the object picture element and the values of a plurality of picture elements around the object picture element, determining the object picture element to be a picture element inside a character on the basis of the probability, and determining the object picture elements, which are not determined to be picture elements inside a character, to be picture elements in a picture region.

It is preferred that dividing the picture elements into flat region picture elements and other picture elements be performed by setting relatively large reference areas and scanning picture elements reference area to reference area as in the aforesaid method disclosed in Japanese Unexamined Patent Publication No. 7(1995)-322061.

It is preferred that the object picture element be determined to be a picture element inside a character when the difference between the value of the object picture element and the value of each picture element around the object picture element is smaller than a predetermined value, at least one of the picture elements around the object picture element is a picture element which forms an edge of a character or a picture element inside a character, and the value of the object picture element is larger than a predetermined value.

The difference between the value of the object picture element and the value of each picture element around the object picture element may be, for instance, the maximum value or the average of differences between the value of the object picture element and the values of the picture elements around the object picture element.

In accordance with another aspect of the present invention, there is provided a region distinguishing system for distinguishing picture elements inside a character region and those in a picture region from each other in picture elements represented by black and white image information, the system comprising
a rough dividing means which divides the picture elements into flat region picture elements including picture elements inside a character and in a picture region and the other picture elements, and
a fine dividing means which divides the flat region picture elements into those inside a character and those in a picture region by taking each of all the flat region picture elements as an object picture element, determining the probability that the object picture element is a picture element inside a character on the basis of the value of the object picture element and the values of a plurality of picture elements around the object picture element, determining the object picture element to be a picture element inside a character on the basis of the probability, and determining the object picture elements, which are not determined to be picture elements inside a character, to be picture elements in a picture region.

It is preferred that the fine dividing means determines the object picture element to be a picture element inside a character when the difference between the value of the object picture element and the value of each picture element around the object picture element is smaller than a predetermined value, at least one of the picture elements around the object picture element is a picture element which forms an edge of a character or a picture element inside a character, and the value of the object picture element is larger than a predetermined value.

In accordance with the present invention, all the picture elements represented by the black and white image information are once divided into flat region picture elements and the other picture elements, and then the flat region picture elements are then divided into those inside a character region and those in a picture region by taking each of all the flat region picture elements as an object picture element and determining the probability that the object picture element is a picture element inside a character on the basis of the value of the object picture element and the values of a plurality of picture elements around the object picture element, and accordingly, there is no fear that the inside of a wide character is mistaken for a picture region.

Further as an additional result of dividing the flat region picture elements into character region picture elements (those inside a character region) and picture region picture elements (those in a picture region), the accuracy in the final distinguishment of the picture elements can be improved even if the picture elements are divided into the flat region picture elements and the other picture elements by use of the conventional method where the picture elements are scanned reference area to reference area and setting the reference areas smaller as compared with the conventional method. This permits the scale of the circuit to be small and the data processing algorism to be simple.

### BRIEF DESCRIPTION OF THE DRAWINGS

Figure 1 is a block diagram showing a region distinguishing system in accordance with an embodiment of the present invention,
Figure 2 is a view for illustrating features of an image in a halftone dot region,
Figure 3 is a view for illustrating features of an edge of a character,
Figure 4 is a view for illustrating features of the inside of a character,
Figure 5 is a flow chart for illustrating the processing algorism for distinguishing the regions,
Figure 6 is a view showing an example of a matrix where image signal components making up an original image are arranged in the main scanning direction and the sub-scanning direction, and
Figures 7A to 7G are views for illustrating examples of operations used in the processing algorism.

### DESCRIPTION OF THE PREFERRED EMBODIMENT

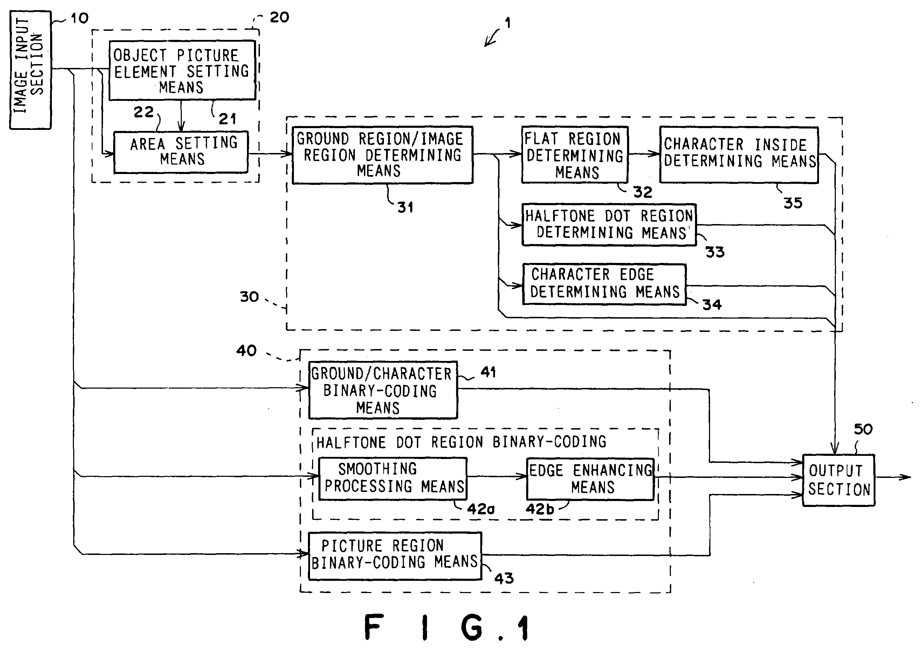

In Figure 1, a region distinguishing system 1 in accordance with an embodiment of the present invention an image input section 10 which may comprise, for instance, an image scanner, a preprocessing section 20 including an object picture element setting means 21 and an area setting means 22, a region distinguishing section 30 including a ground region/image region determining means 31, a flat region determining means 32, a halftone dot region determining means 33, a character edge determining means 34 and a character inside determining means 35, a binary-coding section 40 including a ground/character region binary-coding means 41, a halftone dot region binary-coding means 42 and a picture region binary-coding means 43, and an output section 50.

The object picture element setting means 21 sets object picture elements f1(m1, n1) and f2(m2, n2) in the main scanning direction and the sub-scanning direction by use of an image signal S made up of a multiple gradation image signal components sampled picture element to picture element. Each of m1 and m2 represents the number of the picture element as numbered in the main scanning direction and each of n1 and n2 represents the number of the picture element as numbered in the sub-scanning direction.

The area setting means 22 sets, on the basis of the image signal S and the object picture element f1(m1, n1), an area F1(m1, n1) of a (2×i1+1)×(2×j1+1) matrix which is formed of a plurality of picture elements, which are continuous in the main scanning direction and the sub-scanning direction, and the center of which is at the object picture element f1(m1, n1) or, on the basis of the image signal S and the object picture element f2(m2, n2), an area F2(m2, n2) of a (2×i2+1)×(2×j2+1) matrix which is formed of a plurality of picture elements, which are continuous in the main scanning direction and the sub-scanning direction, and the center of which is at the object picture element f2(m2, n2). Each of (2×i1+1) and (2×i2+1) represents the number of the picture elements as numbered in the main scanning direction and each of (2×j1+1) and (2×j2+1) represents the number of the picture elements as numbered in the sub-scanning direction.

The ground region/image region determining means 31 distinguishes from each other the ground region (i.e., the region consisting of the margin and the background) and the image region (i.e., the region consisting of a character region formed of characters, tables, line drawings and/or the like, and a halftone region formed of picture regions and/or halftone dot image regions. Specifically, the ground region/image region determining means 31 determines whether the area F1(m1, n1) is a ground region or an image region by detecting a pattern in which the values (densities) of the picture elements in the area F1(m1, n1) are distributed or a characteristic value obtained according to a predetermined formula, and comparing the detected pattern or characteristic value with a predetermined pattern or characteristic value.

The flat region determining means 32 extracts a flat region (a region inside a character and a picture region) from the region which has been determined to be an image region by the ground region/image region determining means 31, and determines an area F1(m1, n1) to be a flat region when the difference between a maximum value Lmax in the values of all the picture elements in the area F1(m1, n1) and a minimum value Lmin in the values of all the picture elements in the area F1(m1, n1) is smaller than a predetermined value P.

The halftone dot region determining means 33 extracts a halftone dot region determined means 33 extracts a halftone dot region from the region which has been determined to be an image region by the ground region/image region determining means 31, and determines an area F1(m1, n1) to be a halftone dot region when the pattern in which the values of the picture elements in the area F1(m1, n1) are arranged corresponds to a predetermined pattern.

The character edge determining means 34 extracts a character edge portion from the region which has been determined to be an image region by the ground region/image region determining means 31, and determines an area F1(m1, n1) to be a character edge portion when the difference between a maximum value Lmax in the values of all the picture elements in the area F1(m1, n1) and a minimum value Lmin in the values of all the picture elements in the area F1(m1, n1) is larger than a predetermined value N, and the value of the object picture element f1(m1, n1) is larger than a predetermined value TH1 (in the case of a character in black) or the value of the object picture element f1(m1, n1) is smaller than the predetermined value TH1 (in the case of a hollow character.

The character inside determining means 35 determines whether each of the picture elements in the region which has been determined to be a region inside a character or a picture region ("composite flat region" to be described later is a picture element in a region inside a character or in a picture region. The character inside determining means 35 analyzes the probability that an object picture element f2(m2, n2) set in the composite flat region is a picture element in a region inside a character on the basis of the values of the picture elements in an area F2(m2, n2) of a (2×i2+1)×(2×j2+1) matrix which is formed of a plurality of picture elements and the center of which is at the object picture element f2(m2, n2), and determines the object picture element F2(m2, n2) to be a picture element inside a character on the basis of the probability, while determines the object picture elements, which are not determined to be picture elements inside a character, to be picture elements in a picture region. The character inside determining means 35 determines the object picture element F2(m2, n2) to be a picture element inside a character when the difference between the value of the object picture element F2(m2, n2) and the value of each of the other picture elements in the area F2(m2, n2) (e.g., the maximum value or the average of differences between the value of the object picture element and the values of the other picture elements) is smaller than a predetermined value, at least one of the other picture elements is a picture element which forms an edge of a character (will be referred to as "an edge picture element", hereinbelow) or a picture element inside a character, and the value of the object picture element F2(m2, n2) is larger than a predetermined value. Whether the object picture element F2(m2, n2) is a picture element inside a character may be determined on the basis of other standards.

The ground/character binary-coding means 41 binary-codes the multiple gradation image signal fraction for the ground region and the character region by a simple binary coding method.

The halftone dot region binary coding means 42 is provided with a smoothing processing means 42a which carries out smoothing processing on an image signal fraction for the halftone dot region by use of a low-pass filter or the like and thereby once blurs the image signal fraction for the halftone dot region, and an edge enhancing means 42b which carries out edge enhancement processing on the image signal fraction which has been subjected to the smoothing processing, and binary-codes the multiple gradation image signal fraction for the halftone dot region by a dither method (a halftone dot processing method). With this arrangement, occurrence of moiré is suppressed and printing can be made at a higher quality as compared with when the image signal fraction is simply binary-coded by a pseudo-halftone expression method according to a dither method.

The picture region binary-coding means 43 binary-codes the multiple gradation image signal fraction for the picture region by a pseudo-halftone expression method according to a dither method, an error diffusion method or the like.

The output section 50 comprises a selector and selectively outputs binary-coded image signal fractions respectively output from the ground/character binary-coding means 41, the halftone dot region binary-coding means 42 and the picture region binary-coding means 43 according to the region distinguishing signal output from the region distinguishing section 30 for each picture element. The binary-coded image signal fractions output from the output section 50 make up a binary coded image signal which represents the original image and is input into a printer (not shown), and by making print on the basis of the binary-coded image signal output from the output section 50, optimal printing can be obtained.

As can be seen from Figure 1, in this particular embodiment, the ground/character binary-coding means 41, the halftone dot region binary-coding means 42 and the picture region binary-coding means 43 are not arranged to binary-code only the image signal fractions for the respective corresponding regions but to binary-code the whole image signal input from the image input section 10. However, since the output section 50 selectively outputs binary-coded image signal fractions output from the ground/character binary-coding means 41, the halftone dot region binary-coding means 42 and the picture region binary-coding means 43 according to the region distinguishing signal output from the region distinguishing section 30 for each picture element, each region of the binary-coded image signal output from the output section 50 is binary-coded by the corresponding binary-coding means as a result.

The binary-coding means 41, 42 and 43 may be arranged so that only the image signal fractions for the regions corresponding to the respective binary-coding means 41, 42 and 43 are input into the respective binary-coding means 41, 42 and 43 according to the region distinguishing signal output from the region distinguishing section 30 and the ground/character binary-coding means 41, the halftone dot region binary-coding means 42 and the picture region binary-coding means 43 binary-code only the image signal fractions for the respective corresponding regions. For example, the image signal fractions for the ground region and the character region may be input only into the ground/character binary coding means 41 and the ground/character binary coding means 41 may binary-code only the image signal fractions for the ground region and the character region.

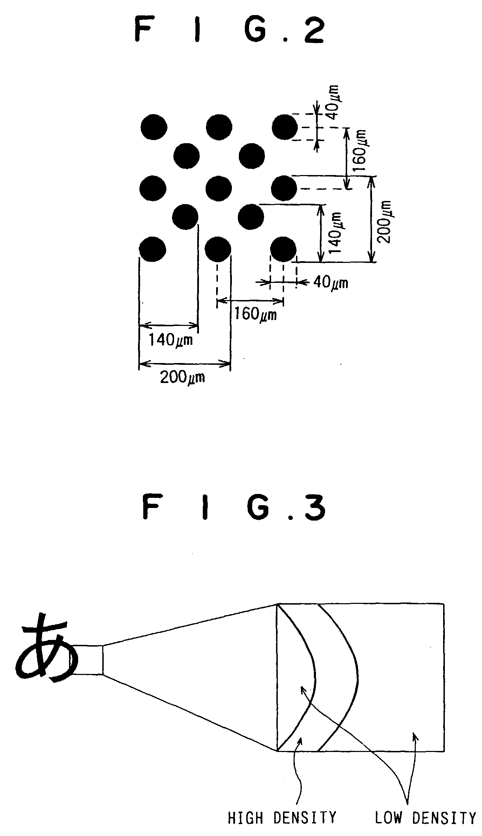

The processing algorism for distinguishing the regions employed in the present invention will be described in detail with reference to Figures 2 to 7 (7A to 7G), hereinbelow.

Features of each region on the original to be read by the image input section 10 will be described first.

Figure 2 is a view for illustrating features of an image in a halftone dot region and is an enlarged view of a halftone dot image which is a relatively dark image (e.g., a gray image) formed on a relatively light ground, is of 145 *lpi* (lines per inch) and is 45° in screen angle. In Figure 2, each black dot indicates a halftone dot. Each halftone dot is about 40µm in diameter, and the halftone dots are arranged at pitches of 160mm in both the main scanning direction and the sub-scanning direction and are arranged in a row in a direction at 45°. As can be understood from Figure 2, a halftone dot region is characterized in that a halftone dot appears periodically.

The aforesaid halftone dot region determining means 33 determines whether an area F1(m1, n1) whose center is at an object picture element f1(m1, n1) is a halftone dot region on the basis of the feature of the halftone dot region.

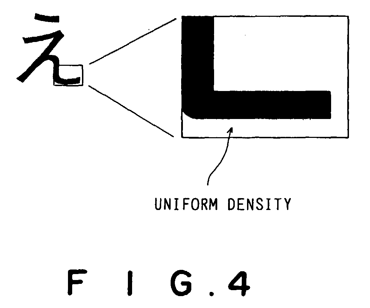

Figure 3 is a view for illustrating features of a character edge portion and shows a Japanese alphabet (kana) 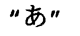 which is written in a relatively high density on a ground which is relatively low in density. The right side of Figure 3 is an enlarged view of a part of the (kana) 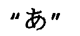 and shows the edge portion of the part of the character (Japanese alphabet) in the solid line with the portion inside the character shown as a blank for the purpose of clearly showing the edge portion.

As can be seen form the right side of Figure 3, the character edge portion is typically large in density difference from the ground region. This holds true for a so-called hollow character which is formed as a relatively light portion on a relatively dark ground.

The aforesaid character edge determining means 34 determines whether an area F1(m1, n1) whose center is at an object picture element f1(m1, n1) is a character edge portion on the basis of the feature of the character edge portion.

Figure 4 is a view for illustrating features of a character inside region (a region inside a character) and shows a Japanese alphabet (kana) 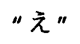 which is written in a relatively high density on a ground which is relatively low in density. The right side of Figure 4 is an enlarged view of a part of the (kana) 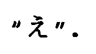 As can be seen from the right side of Figure 4, the character inside region is characterized in that the density is substantially equal to the character edge portion and the density distribution is substantially uniform (±several %).

The aforesaid character inside determining means 35 determines whether an object picture element f2(m2, n2) set in a flat region is a picture element inside a character on the basis of the feature of the character inside region. In other words, the character inside determining means 35 determines whether an object picture element f2(m2, n2) set in a flat region is a picture element inside a character or a picture region picture element. It is needless to say that the character edge portion and the character inside region form a character region.

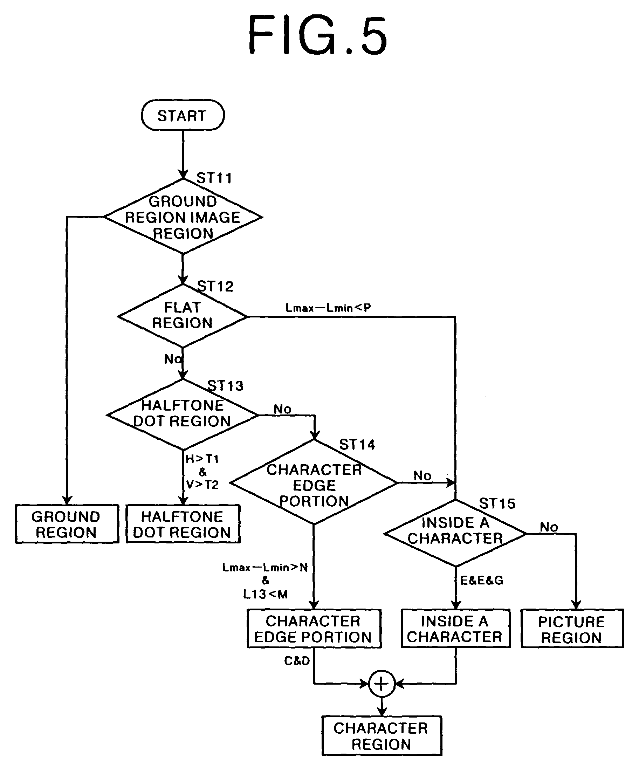

The procedure of distinguishing regions in black and white image information in the region distinguishing system shown in Figure 1 will be described with reference to Figures 5 to 7 (7A to 7G), hereinbelow.

The processing shown in the flow chart in Figure 5 can be broadly divided into (1) ground region/image region determining processing, (2) flat region determining processing, (3) halftone dot region determining processing, (4) character edge portion determining processing and (5) character inside determining processing (character inside/picture region determining processing).

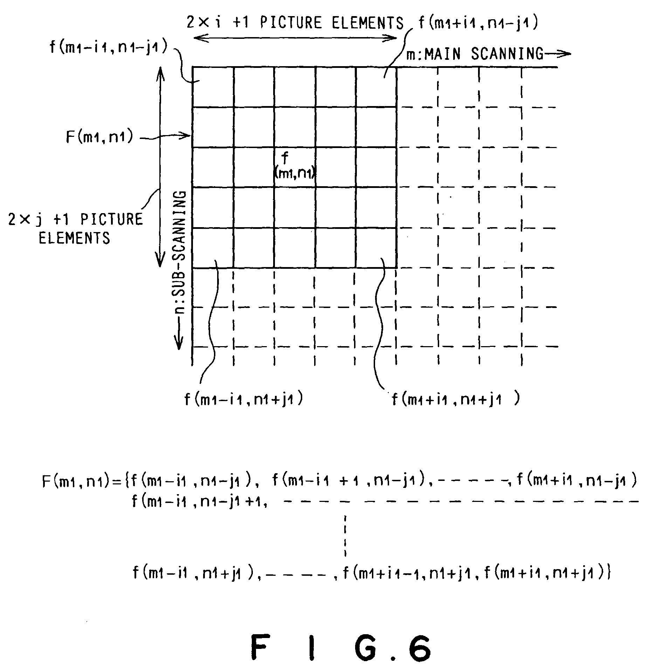

It is assumed that sampling and quantization are carried out by a scanner (image input section 10) at a resolution of the scanner, and the picture elements of the resultant digital image signal having multiple level picture element values (densities) are arranged in a matrix in both the main scanning direction and the sub-scanning direction as shown in Figure 6. The resolution of the scanner should be at least twice the period at which the halftone dot appears, according to the sampling theorem.

The picture elements in the matrix are scanned in the main scanning direction and the sub-scanning direction and an object picture element f1(m1, n1) is set by the object picture element setting means 21. Then an object area F1(m1, n1) which is formed of a plurality of picture elements, (2×i1+1) picture elements in the main scanning direction and (2×j1+1) picture elements in the sub-scanning direction and the center of which is at the object picture element f1(m1, n1) is set by the area setting means 22, where i1 and j1 are integers not smaller than 1. The object picture element f1(m1, n1) is shifted in sequence by (2×i1+1) picture elements in the main scanning direction and is shifted by (2×j1+1) picture elements in the sub-scanning direction as required. Accordingly, the object area F1(m1, n1) is shifted in sequence one area by one area. In this particular embodiment, (2×i1+1)× (2×j1+1) is 5×5.

In the ground region/image region determining processing by the ground region/image region determining means 31 (step ST11), in order to determine whether the area F1(m1, n1) is a ground region or an image region (including a character region, a picture region and a halftone dot region), a distribution pattern in which the values (densities) of the picture elements in the object area F1(m1, n1) are distributed or a certain characteristic value is detected. When the characteristic value is employed, the values of picture elements in the object area F1(m1, n1) (i.e., picture elements (m1-i1, n1-j1), (m1-i1+1, n1-j1), ......, (m1+i1-1, n1+j1), (m1+i1, n1+j1)) are compared with a predetermined threshold value d according to a predetermined formula, and the number of picture elements satisfying a predetermined condition is counted. Then the count value is compared with a threshold value P1, thereby detecting a characteristic value. (See, for instance, Japanese Unexamined Patent Publication No. 7(1995)-322061.) Then the detected pattern or characteristic value is compared with a predetermined pattern or characteristic value, and whether the object area F1(m1, n1) is a ground region or an image region is determined on the basis of the result of the comparison.

The processing described above is carried out on all the areas of the whole image data, and whether the areas are ground regions or image regions, respectively, is stored in a memory (not shown).

In the flat region determining processing by the flat region determining means 32 (step ST12), a flat region consisting of a character inside region and a picture region is extracted from the image region determined by the ground region/image region determining means 31. Specifically, for each of the areas which have been determined to be image regions, the values L1 to L25 of all the picture elements in the area are detected, and the maximum picture element value Lmax and the minimum picture element value Lmin are determined, and when the difference between the maximum picture element value Lmax and the minimum picture element value Lmin (Lmax-Lmin) in a given area is smaller a predetermined value P, the area is determined to be a flat region. For example, in the case where the image is expressed in 256 (0 to 255) gradations, when the difference between the maximum picture element value Lmax and the minimum picture element value Lmin (Lmax-Lmin) in a given area is not larger than 10, the area is determined to be a flat region.

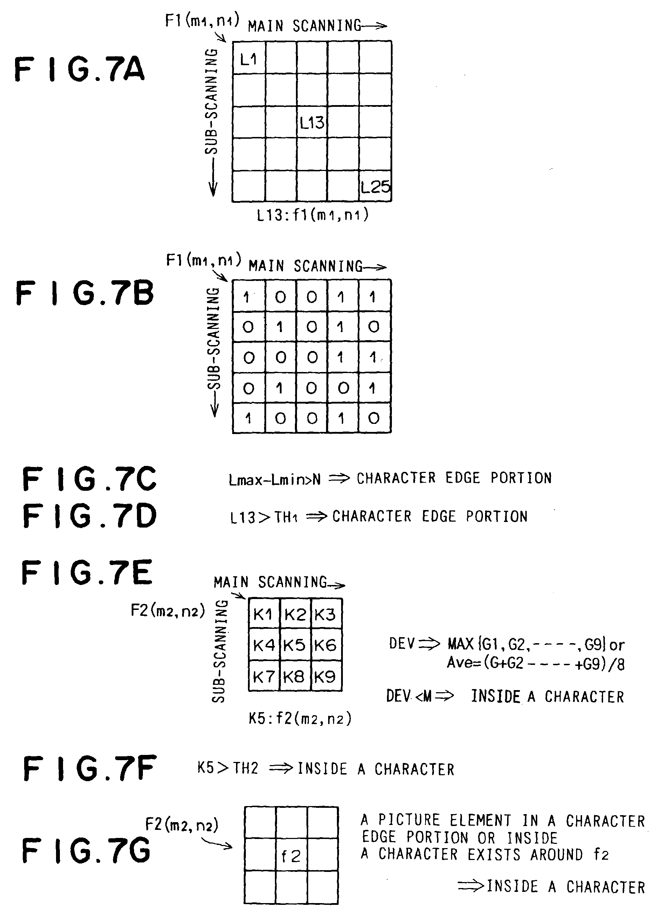

In the halftone dot region determining processing by the halftone dot region determining means 33 (step ST13), a halftone dot region is extracted from the image region determined by the ground region/image region determining means 31. Specifically, for each of the areas other than those which have been determined to be flat regions in step ST12 out of the areas which have been determined to be image regions, the average Ave of the values L1 to L25 of all the picture elements in the area is calculated as shown in Figure 7A. Then the image signal fraction for the area is subjected to temporary binary coding according to whether the image signal component for each of the picture elements in the area is larger than the average Ave, whereby the multiple gradation image signal fraction is converted to a binary-coded image signal fraction as shown in Figure 7B. Then whether the pattern in the main scanning direction and the sub-scanning direction of the binary-coded image signal components making up the binary-coded image signal fraction for the area corresponds to a predetermined halftone dot pattern is determined. For example, the number H of times at which the values of the picture elements change from 0 to 1 or 1 to 0 in the main scanning direction and the number V of times at which the values of the picture elements change from 0 to 1 or 1 to 0 in the sub-scanning direction are calculated, respectively, and an area in which the number H is not smaller than a predetermined value T1 and at the same time the number V is not smaller than a predetermined value T2, the area is determined to be a halftone dot area. For example, the predetermined values T1 and T2 may be both 6.

In the character edge portion determining processing by the character edge determining means 34 (step ST14), a character edge portion is extracted from the image region determined by the ground region/image region determining means 31. Specifically, for each of the areas other than those which have been determined to be halftone dot regions in step ST13 out of the areas which have been determined to be image regions, the values L1 to L25 of all the picture elements in the area are detected, and the maximum picture element value Lmax and the minimum picture element value Lmin are determined, and when the difference between the maximum picture element value Lmax and the minimum picture element value Lmin (Lmax-Lmin) in a given area is larger a predetermined value N (Figure 7A), and the value L13 of the object picture element f1(m1, n1) is larger than a predetermined value TH1 (in the case of a character in black)(Figure 7D), the area is determined to be a character edge portion. In the case of a hollow character, when the difference between the maximum picture element value Lmax and the minimum picture element value Lmin (Lmax-Lmin) in a given area is larger the predetermined value N, and the value L13 of the object picture element f1(m1, n1) is smaller than the predetermined value TH1, the area is determined to be a character edge portion. The areas other than those which have been determined to be halftone dot regions in step ST13 and those which have been determined to be character edge portions in step ST14 out of the areas which have been determined to be image regions are considered to be a region inside a character or a picture region and added to the flat regions extracted in step ST12. In the processing executed in step ST14, points at which density change is large are searched.

In the character inside determining processing by the character inside determining means 35 (step ST15), the composite flat region (the flat regions extracted in step ST12 plus the areas other than those which have been determined to be halftone dot regions in step ST13 and those which have been determined to be character edge portions in step ST14 out of the areas which have been determined to be image regions) is divided into a region inside a character and a picture region. Specifically, an object picture element f2(m2, n2) is set by the object picture element setting means 21 in each of all the areas which have been determined to be the composite flat regions. Then an object area F2(m2, n2) which is formed of a plurality of picture elements, (2×i2+1) picture elements in the main scanning direction and (2×j2+1) picture elements in the sub-scanning direction and the center of which is at the object picture element f2(m2, n2) is set by the area setting means 22, where i2 and j2 are integers not smaller than 1. The object picture element f2(m2, n2) is shifted in sequence one picture element by one picture element in the main scanning direction and the sub-scanning direction as required. Accordingly, the object area F2(m2, n2) is shifted in sequence one picture element by one picture element. In this particular embodiment, (2×i2+1)× (2×j2+1) is 3×3.

Then for each of the areas F2(m2, n2) of 3×3 matrix, the probability that the object picture element f2(m2, n2) is a picture element inside a character on the basis of the values of nine picture elements in the area F2(m2, n2) is determined, and whether the object picture element f2(m2, n2) is a picture element inside a character. The object picture elements f2(m2, n2), which are not determined to be picture elements inside a character, is determined to be picture elements in a picture region. Thus the aforesaid problem that the inside of characters is mistaken for a picture region when the characters are relatively large in width can be avoided.

Whether the object picture element f2(m2, n2) is a picture element inside a character is determined in the following manner in this particular embodiment. That is, as shown in Figures 7E to 7G, for all the areas which have been determined to be composite flat regions, differences G1(=K1-K5), G2(=K2-K5), G3(=K3-K5), G4(=K4-K5), G6(=K6-K5), G7(=K7-K5), G8(=K8-K5) and G9(=K9-K5) between the value K5 of the object picture element f2(m2, n2) and the value (K1, K2, K3, K4, K6, K7, K8 or K9) of each of the other eight picture elements in the object area F2(m2, n2) are calculated. Then when the deviation DEV of the value of the object picture element f2(m2, n2) from the values of the picture elements around the object picture element f2(m2, n2) represented by the maximum of the differences or the average of the differences is smaller than a predetermined value M (Figure 7E), the value K5 of the object picture element f2(m2, n2) is larger than a predetermined value TH2 (in the case of a character in black) (Figure 7F) or the value K5 of the object picture element f2(m2, n2) is smaller than a predetermined value TH2 (in the case of a hollow character), and when at least one of the picture elements around the object picture element f2(m2, n2) is a picture element in a character edge portion or inside a character (Figure 7G).

In accordance with the procedure described above, whether each of picture elements in the image region is a picture element in a halftone dot region or a character region (a character edge portion plus a region inside a character) can be determined and the picture elements which are neither in a halftone dot region nor in a character region may be determined to be picture elements in a picture region. As a result, an image signal representing an original on which characters, halftone dots, a picture and/or the like mingle can be divided into image signal fractions representing a ground region, a character region, a halftone dot region and a picture region. Especially, even the region inside a wide character and the picture region, which have been difficult to distinguish, can be surely distinguished from each other. Further since distinguishment of the region inside a character and the picture region can be performed by use of small areas, e.g., 3×3, the algorism and the circuit may be simple.

The parameters M, N, P, T1, T2, TH1 and TH2 need not be fixed but may be changed according to, for instance, the kind of a printer (not shown) connected to the output section 50.

In parallel to the region determining processing described above, binary-coding of the multiple gradation image signal is performed. That is, the ground/character binary-coding means 41 binary-codes the multiple gradation image signal fraction for the ground region and the character region by a simple binary coding method and the halftone dot region binary coding means 42 carries out smoothing processing on the multiple gradation image signal fraction for the halftone dot region by use of a low-pass filter or the like, thereby once blurring the image signal fraction for the halftone dot region, carries out edge enhancement processing by use of a median filter or the like on the image signal fraction which has been subjected to the smoothing processing, thereby alleviating the blur, binary-codes the multiple gradation image signal fraction for the halftone dot region by a dither method (a halftone dot processing method), and binary-codes the multiple gradation image signal fraction for the picture region by a pseudo-halftone expression method such as a dither method or an error diffusion method. The parameters for binary coding employed in the binary-coding means 41, 42 and 43 are changed according to the kind of a printer (not shown) connected to the output section 50. That is, the parameters are changed depending on whether the region distinguishing system 1 is applied to a stencil printer or other printers.

The output section 50 selectively outputs the binary-coded image signal fraction from the ground/character binary coding means 41 when the region distinguishing section 30 is outputting a region distinguishing signal indicating a ground region or character region, the binary-coded image signal fraction from the halftone dot region binary coding means 42 when the region distinguishing section 30 is outputting a region distinguishing signal indicating a halftone dot region, and the binary-coded image signal fraction from the picture region binary coding means 43 when the region distinguishing section 30 is outputting a region distinguishing signal indicating a picture region. The binary-coded image signal fractions output from the output section 50 which have been binary-coded in different methods according to the types of the region make up a binary coded image signal which represents the original image and is input into a printer (not shown).

As can be understood from the description above, in accordance with the present invention, all the picture elements represented by the black and white image information are once divided into flat region picture elements and the other picture elements, and then the flat region picture elements are then divided into those inside a character region and those in a picture region by taking each of all the flat region picture elements as an object picture element and determining the probability that the object picture element is a picture element inside a character on the basis of the value of the object picture element and the values of a plurality of picture elements around the object picture element, and accordingly, the inside of a wide character can be accurately distinguished from a picture region.
Further as an additional result of dividing the flat region picture elements into character region picture elements and picture region picture elements, the accuracy in the final distinguishment of the regions is not deteriorated even if the picture elements are divided into the flat region picture elements and the other picture elements by use of the conventional method where the picture elements are scanned reference area to reference area and setting the reference areas smaller as compared with the conventional method. As a result, the overall distinguishing processing can be performed by use of a simpler data processing algorism and a simpler circuit.

## Claims

1. A region distinguishing method of distinguishing picture elements inside a character region and those in a picture region from each other in picture elements represented by black and white image information, the method comprising the steps of
dividing the picture elements into flat region picture elements including picture elements inside a character and in a picture region and the other picture elements, and
dividing the flat region picture elements into those inside a character and those in a picture region by taking each of all the flat region picture elements as an object picture element, determining the probability that the object picture element is a picture element inside a character on the basis of the value of the object picture element and the values of a plurality of picture elements around the object picture element, determining the object picture element to be a picture element inside a character on the basis of the probability, and determining the object picture elements, which are not determined to be picture elements inside a character, to be picture elements in a picture region.

2. A region distinguishing method as defined in Claim 1 in which the object picture element is determined to be a picture element inside a character when the difference between the value of the object picture element and the value of each picture element around the object picture element is smaller than a predetermined value, at least one of the picture elements around the object picture element is a picture element which forms an edge of a character or a picture element inside a character, and the value of the object picture element is larger than a predetermined value.

3. A region distinguishing system for distinguishing picture elements inside a character region and those in a picture region from each other in picture elements represented by black and white image information, the system comprising
a rough dividing means which divides the picture elements into flat region picture elements including picture elements inside a character and in a picture region and the other picture elements, and
a fine dividing means which divides the flat region picture elements into those inside a character and those in a picture region by taking each of all the flat region picture elements as an object picture element, determining the probability that the object picture element is a picture element inside a character on the basis of the value of the object picture element and the values of a plurality of picture elements around the object picture element, determining the object picture element to be a picture element inside a character on the basis of the probability, and determining the object picture elements, which are not determined to be picture elements inside a character, to be picture elements in a picture region.

4. A region distinguishing system as defined in Claim 3 in which the fine dividing means determines the object picture element to be a picture element inside a character when the difference between the value of the object picture element and the value of each picture element around the object picture element is smaller than a predetermined value, at least one of the picture elements around the object picture element is a picture element which forms an edge of a character or a picture element inside a character, and the value of the object picture element is larger than a predetermined value.
